# EUROPEAN PATENT SPECIFICATION

(11) **EP 4 054 907 B1**
(45) Date of publication and mention of the grant of the patent: **03.01.2024**
(21) Application number: 20816306.3
(22) Date of filing: 02.11.2020
(51) Int. Cl.: B60T 13/14

(54) **DEVICE FOR CONTROLLING THE BRAKING OF A TRAILER**
GERÄT ZUM STEUERN DER BREMSUNG EINES ANHÄNGERS
ENGIN POUR CONTRÔLER LE FREINAGE D'UN REMORQUE

(30) Priority: 04.11.2019 IT 201900020296
(43) Date of publication of application: 14.09.2022
(73) Proprietor: SAFIM S.r.l., 41123 Modena (MO) (IT)
(72) Inventor: MAMEI, Enrico, 41123 Modena (MO) (IT)
(74) Representative: Zoli, Filippo
(86) International application number: PCT/IB2020/060258
(87) International publication number: WO 2021/090138

(56) References cited:
- EP-A1- 3 103 691
- EP-A1- 3 401 176
- CN-A- 107 264 499
- CN-A- 107 914 688
- US-A1- 2007 102 996

## Description

### Technical Field

The present invention relates to a device for controlling the braking of a trailer.

### Background Art

It is well known that in the case of a trailer towed by a tractor, their braking systems are operationally connected in such a way that the braking of the tractor operated by the operator also causes the trailer towed to brake.

The braking system of the trailer is then driven by the braking system of the tractor in order to synchronize the braking forces acting on the same. Therefore, when the operator activates the brake pedal of the tractor, it operates on the tractor's wheels and, by means of a braking valve (called trailer-brake valve), also on the braking system of the trailer.

As is well known, today towing vehicles are connected to the relevant trailer by means of a connecting device comprising a pair of male couplings adapted to fit inside a pair of relevant female couplings associated with the trailer.

Document EP 3 103 691 A1 discloses a trailer brake control system according to the state of the art and comprising a control line, an additional line, both connectable to a pressure supply, a braking line connectable to the braking system of the trailer and an accumulator which is connected to the additional line and to the braking line through valve means.

In particular, the female couplings are connectable to a control line which is adapted to supply the trailer's braking system, and to an additional line, respectively, which is adapted to deactivate the emergency and/or parking brake of the trailer itself.

The control line is able to supply the operating fluid, generally oil, at a pressure comprised between 0 and 150 bar variable according to the braking pressure of the tractor. The trailer braking is therefore controlled by the operating fluid pressure along the control line, so that the braking of the tractor and that of the trailer are as synchronized as possible.

The additional line conveys, instead, the operating fluid at a pressure comprised between 15 bar and 35 bar in order to keep the automatic and/or parking brake deactivated. In case of emergency situations, the additional line must reset the operating fluid pressure to zero, for example by means of its connection to the tank of the towing vehicle, so as to allow the activation of the emergency and/or parking brake of the trailer and, therefore, the braking of the same.

As you can easily guess, the higher the braking mass of the trailer, the higher the oil consumption required to brake. This means that in devices of known type, with the same flow rate, the greater the braking mass of the trailer, the longer the braking time.

Since current legislation requires the braking time of the trailer to remain within a predefined range, it may happen that, in the case of particularly heavy trailers, the braking time exceeds the maximum acceptable value.

### Description of the Invention

The main aim of the present invention is to devise a device for controlling the braking of a trailer that allows the braking time of the trailer itself to be limited regardless of the weight of the trailer's mass.

Within this aim, one object of the present invention is to keep the braking time within the time limits required by law even in the case of very heavy trailers. Another object of the present invention is to meet the required braking times regardless of the braking intensity of the towing vehicle.

Another object of the present invention is to devise a device for controlling the braking of a trailer that allows overcoming the above mentioned drawbacks of the prior art within a simple, rational, easy, effective to use and low cost solution.

The above mentioned objects are achieved by the present device, according to claim 1, for controlling the braking of a trailer.

### Brief Description of the Drawings

Other characteristics and advantages of the present invention will be more evident from the description of a preferred, but not exclusive, embodiment of a device for controlling the braking of a trailer, illustrated by way of an indicative, yet non-limiting example, in the attached tables of drawings in which:
Figure 1 is the hydraulic diagram of a device according to the invention, in a first embodiment;
Figure 2 is the hydraulic diagram of a device according to the invention, in a second embodiment;
Figure 3 is the hydraulic diagram of a device according to the invention, in a third embodiment;
Figure 4 is the hydraulic diagram of a device according to the invention, in a fourth embodiment.

### Embodiments of the Invention

With particular reference to these figures, reference numeral 1 globally indicates a device for controlling the braking of a trailer.

The device 1 comprises at least one control line 2 connectable to a source of an operating fluid at a first pressure, generally comprised between 0 and 150 bar, at least one additional line 3 connectable to a source of a source of an operating fluid at a second pressure, generally comprised between 15 bar and 35 bar, and at least one braking line 4 connectable to the braking system of the trailer, which comprises one or more braking cylinders 5.

In particular, the braking line 4 is connectable to the supply chamber 5a of the braking cylinders 5 of the trailer in such a way that, as a result of the pressure increase inside it, the relevant piston 5b moves from the home position to the braking position.

Preferably, a plurality of supply lines 4a branch out from the braking line 4, each supply line being directly connectable to a relevant braking cylinder 5. The braking line 4 then has a plurality of openings, each of which is communicating with a relevant supply line 4a.

The additional line 3 is, on the other hand, connectable to the automatic and/or parking brake (not shown in the figures) of the trailer, so as to keep it deactivated. When the pressure of the operating fluid, generally oil, along the additional line 3 fails, the automatic and/or parking brake is activated. According to the invention, the device 1 comprises at least one accumulator 6 which is connected in a fluid-operated manner to the additional line 3 and valve means 7 positioned between the accumulator 6 and the braking line 4, where said valve means 7 are movable between at least one supply position, wherein the accumulator 6 is placed in communication with the braking line 4, and an isolation position, wherein the accumulator 6 is isolated from the braking line 4. Preferably, there are first one-way valve means 8 placed between the accumulator 6 and the valve means 7, which are adapted to prevent the operating fluid from flowing from the valve means themselves to the accumulator 6.

Appropriately, there are also second one-way valve means 9 placed between the additional line 3 and the accumulator 6 and adapted to prevent the operating fluid from flowing from the accumulator itself towards the additional line 3.

As known to the technician of the sector, the valve means 7 comprise an internally hollow body (not shown in the figures), provided with a plurality of ports communicating with the lines mentioned above, and inside which a distributor is housed in a sliding manner adapted to put in communication, or to obstruct, the aforementioned ports with each other.

In the supply position, the accumulator 6 then conveys the operating fluid under pressure along the braking line 4 and, through it, to the braking cylinders 5, in order to move the corresponding pistons 5b to the braking position. Conveniently, between the control line 2 and the braking line 4, there are additional valve means 10.

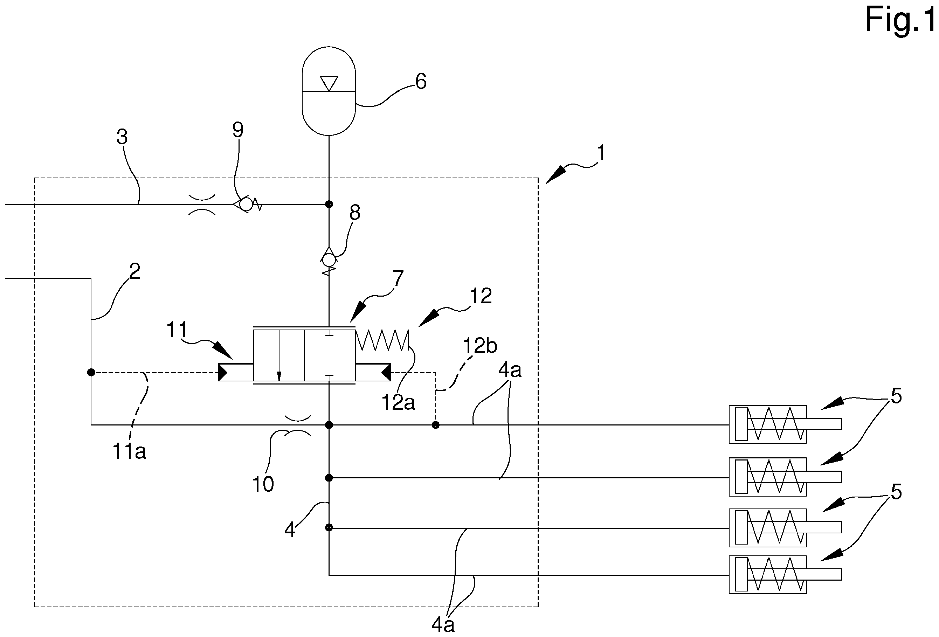

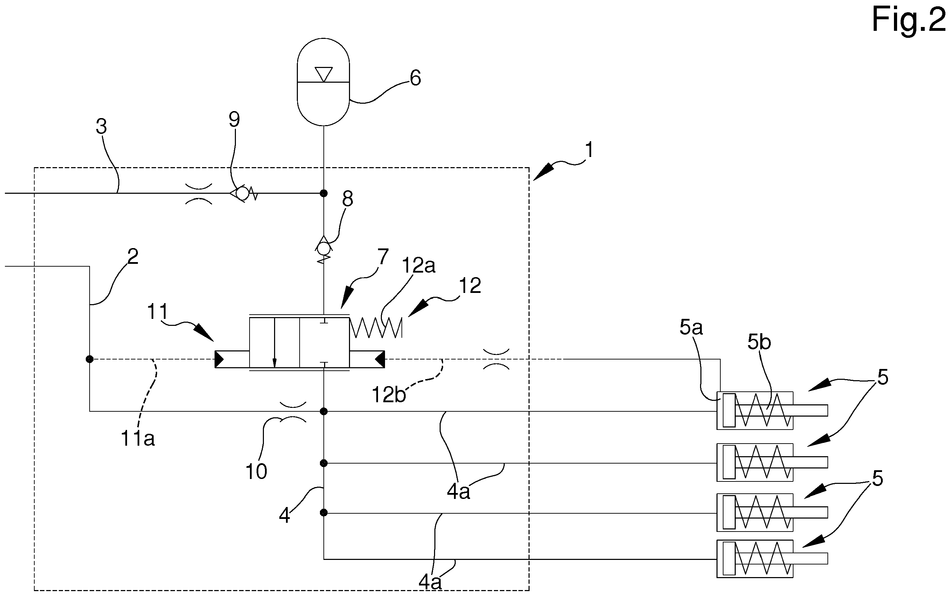

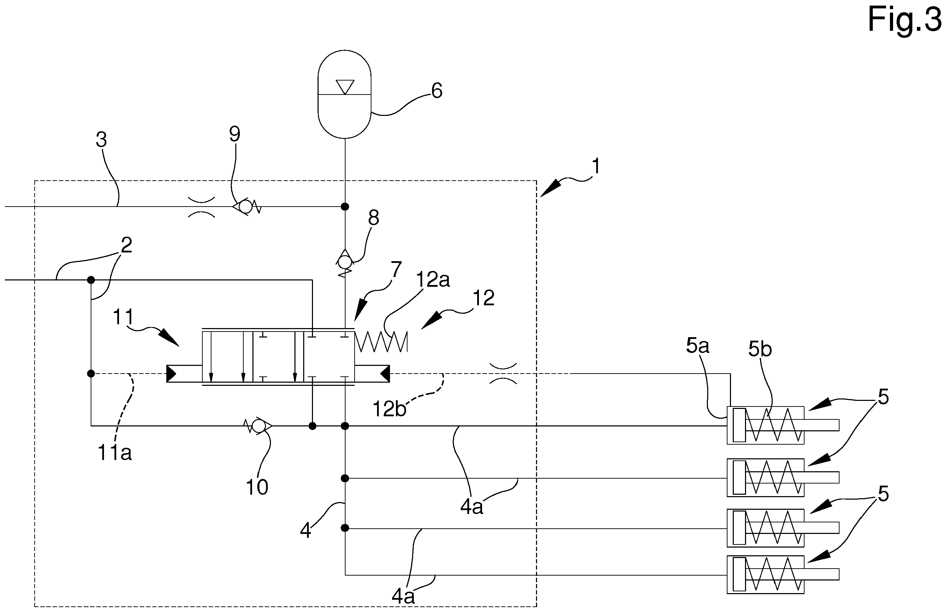

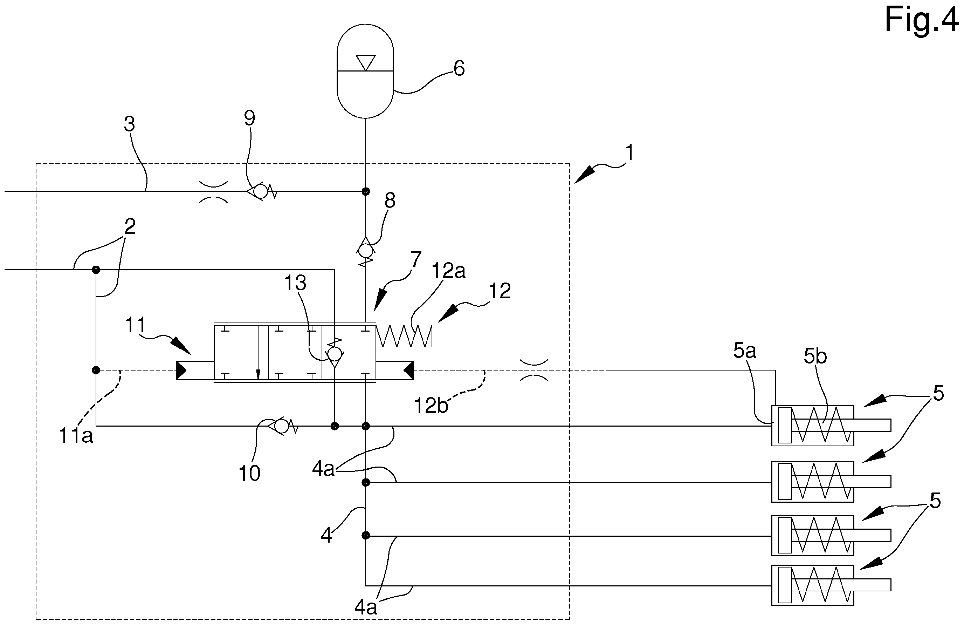

In the embodiments of Figures 1 and 2, the additional valve means 10 are of the type of a bottleneck, while in the embodiments of Figures 3 and 4 they are of the type of a one-way valve.

Still according to the invention, the device 1 comprises at least first piloting means 11 of the valve means 7 comprising at least a first piloting line 11a which is connected in a fluid-operated manner to the control line 2 and adapted to push the valve means 7 towards the supply position, and at least second piloting means 12 operating on the valve means 7 opposite the first piloting means 11. The first and second piloting means 11 and 12 then operate, from opposite sides, on the above mentioned distributor.

Preferably, the second piloting means 12 comprise at least elastic means 12a adapted to counteract the action of the first piloting means 11.

Advantageously, the second piloting means 12 comprise at least a second piloting line 12b of the fluid-operated type. In other words, the second piloting line 12b "sends" a pressure signal, as well as the first piloting line 11a, to the distributor to control the displacement thereof inside the hollow body.

In the embodiment shown in Figure 1, the second piloting line 12b is connected in a fluid-operated manner to the braking line 4 downstream of the additional valve means 10. In this embodiment, the additional valve means 10 are of the type of a narrowing, so a pressure difference is defined as a result of the passage of the operating fluid through it between the control line 2 and the braking line 4.

In this embodiment, the valve means 7 therefore move from the isolation position to the supply position when the pressure along the control line 2 exceeds the force that the second piloting line 12b and the elastic means 12a exert on the valve means themselves, and in particular on the relevant distributor. When the pressure along the braking line 4 equals the pressure along the control line 2, the valve means 7 then return to the isolation position.

Also in this case, with the valve means 7 in the supply position, the operating fluid coming from the accumulator 6 and the one coming from the control line 2 reach the braking line 4.

In the embodiment shown in Figure 1, the valve means 7 therefore have an operation of the proportional type.

In the embodiments shown in Figures 2 to 4, the second piloting line 12b is connected to the braking system of the trailer.

More in detail, the second piloting line 12b is connected to the supply chamber 5a of one of the braking cylinders 5.

Also in these embodiments the operation of the valve means 7 is of the proportional type and they move to the left (with reference to the figures) when the pressure inside the supply chamber 5a equals the pressure along the control line 2.

In the embodiments of Figures 1 and 2, the valve means 7 have only the two positions of supply and isolation, the latter corresponding to the home position. In the embodiments of Figures 3 and 4, on the other hand, the valve means 7 also have an additional position, in which at least the control line 2 is placed in communication with the braking line 4.

More particularly, in the embodiment shown in Figure 3, in the additional position both the accumulator 6 and the control line 2 are placed in communication with the braking line 4.

Appropriately, the additional position is arranged in succession to the supply position, opposite the isolation position. In this embodiment, the home position therefore corresponds to the isolation position, while the additional position is arranged on the opposite side to the isolation position with respect to the supply position.

It follows therefore that, as a result of the pressure increase along the control line 2 with respect to the pressure in the supply chamber 5a, the valve means 7 (and in particular the relevant distributor) initially move from the isolation position to the supply position and then reach, as a result of the further increase in the pressure difference between the first and the second piloting line 11a and 12b, the additional position.

In more detail, in the supply position, the control line 2 is isolated from the braking line 4. As a result of the pressure increase along the control line 2, and thus of the action of the first piloting means 11, the valve means 7 then move from the supply position to the additional position (to the right in the figures), thus opening, in succession, the connection of the braking line 4 to the accumulator 6 (supply position) and, in addition to the latter, to the control line 2 (additional position).

In this embodiment, the additional valve means 10 are of the type of a one-way valve adapted to prevent the operating fluid from flowing from the control line 2 to the braking line 4 and thus to allow only the return flow of the operating fluid from the braking line 4 to the control line 2 at the end of the braking action. More particularly, at the end of the braking action, as a result of the action of the second piloting means 12 and of the pressure drop along the control line 2, the valve means 7 move away from the additional position (to the right in the figures) thus closing the connection between the braking line 4 and the control line 2, so that the one-way valve 10 still allows the outflow towards the control line itself.

In the embodiment shown in Figure 4, on the other hand, the accumulator 6 is isolated from the braking line 4 when the valve means 7 are arranged in the additional position.

In the additional position, the control line 2 is advantageously placed in communication with the braking line 4 by means of at least one one-way valve 13 adapted to prevent the operating fluid from flowing from the control line 2 towards the braking line itself. The one-way valve 13 is therefore adapted to allow only the return flow of the operating fluid from the braking line 4 towards the control line 2 at the end of the braking phase. The additional position is arranged opposite the supply position with respect to the isolation position. In this embodiment, the home position therefore corresponds to the additional position.

As a result of the increase in pressure along the control line 2, and thus of the operation of the first piloting means 11, the valve means 7 then move from the additional position to the isolation position (to the right in the figures) and from the latter to the supply position.

This embodiment allows preventing the operating fluid from flowing out of the accumulator 6 in the control line 2 when the pressure in the accumulator itself is higher than the pressure along the control line 2.

In this case, the additional valve means 10 are of the type of a one-way valve adapted to prevent the operating fluid from flowing from the braking line 4 towards the control line 2 and therefore adapted to allow only the flow in the opposite direction. Therefore, the control line 2 can supply the braking line 4, and therefore the braking cylinders 5 connected thereto, under any operating condition, and the braking line 4 can drain the operating fluid along the control line 2, at the end of the braking action, when the valve means 7 reach the additional position.

Advantageously, the one-way valve 10 comprises calibration elastic means having greater rigidity than the elastic means 12a of the second piloting means 12, so that the one-way valve 10 opens only after the displacement of the valve means 7 to the operating position.

As the technician in the sector can easily appreciate, the embodiment of the second piloting means 12, that can be therefore of the type shown in Figure 1 or of the type shown in the Figures 2 to 4, is regardless of the embodiment of the valve means 7.

It has in practice been noticed that the described invention achieves the intended objects and, in particular, the fact is underlined that the device to which the present invention relates, allows, through the accumulator, exploiting the pressure of the operating fluid present along the additional line to supply the braking cylinders in the initial phase of the braking action, when the pressure along the control line is still too low to activate the braking of the trailer.

The connection between the accumulator and the additional line ensures the filling of the accumulator itself because the additional line is always under pressure unlike the control line.

The device in question therefore makes it possible to reduce the braking time compared to known devices in which the braking line is connected to the control line only, as it provides an additional flow of the operating fluid under pressure by means of the accumulator.

## Claims

1. Device (1) for controlling the braking of a trailer, comprising:
- at least one control line (2) connectable to a source of an operating fluid at a first pressure;
- at least one additional line (3);
- at least one braking line (4) connectable to the braking system of the trailer; at least one accumulator (6) which is connected in a fluid-operated manner to said additional line (3),
valve means (7) positioned between said accumulator (6) and said braking line (4) and movable between at least one supply position, wherein said accumulator (6) is placed in communication with said braking line (4), and an isolation position, wherein said accumulator (6) is isolated from said braking line (4);
at least first piloting means (11) of said valve means (7) comprising at least a first piloting line (11a) which is connected in a fluid-operated manner to said control line (2) and adapted to push said valve means (7) towards said supply position,
at least second piloting means (12) operating on said valve means (7) opposite said first piloting means (11), **characterised in that** the additional line (3) is connectable to a source of an operating fluid at a second pressure.

2. Device (1) according to claim 1, **characterized by** the fact that said second piloting means (12) comprise at least elastic means (12a) adapted to counteract the action of said first piloting means (11).

3. Device (1) according to claim 1 or 2, **characterized by** the fact that said second piloting means (12) comprise at least a second piloting line (12b) of the fluid-operated type.

4. Device (1) according to one or more of the preceding claims, **characterized by** the fact that said control line (2) is communicating with said braking line (4) by means of additional valve means (10).

5. Device (1) according to claim 4, **characterized by** the fact that said additional valve means (10) are of the type of a narrowing.

6. Device (1) according to claim 4 or 5, **characterized by** the fact that said second piloting line (12b) is connected in a fluid-operated manner to said braking line (4) downstream of said additional valve means (10).

7. Device (1) according to claim 3 and claim 4 or 5, **characterized by** the fact that said second piloting line (12b) is connectable to the braking system (5) of the trailer.

8. Device (1) according to one or more of the preceding claims, **characterized by** the fact that said valve means (7) are movable to at least one additional position, in which said control line (2) is placed in communication with said braking line (4).

9. Device (1) according to claim 8, **characterized by** the fact that in said additional position both said accumulator (6) and said control line (2) are placed in communication with said braking line (4).

10. Device (1) according to claim 9, **characterized by** the fact that said additional position is arranged in succession to said supply position, opposite said isolation position.

11. Device (1) according to claim 4 and claim 9 or 10, **characterized by** the fact that said additional valve means (10) are of the type of a one-way valve adapted to prevent the operating fluid from flowing from the control line (2) to the braking line (4).

12. Device (1) according to claim 8, **characterized by** the fact that in said additional position said accumulator (6) is isolated from said braking line (4).

13. Device (1) according to claim 12, **characterized by** the fact that in said additional position, said control line (2) is placed in communication with said braking line (4) by means of at least one one-way valve (13) adapted to prevent the operating fluid from flowing from the control line (2) to the braking line itself.

14. Device (1) according to claim 12 or 13, **characterized by** the fact that said additional position is arranged opposite said supply position relative to said isolation position.

15. Device (1) according to claim 4 and claim 13 or 14, **characterized by** the fact that said additional valve means (10) are of the type of a one-way valve adapted to prevent the operating fluid from flowing from the braking line (4) to said control line (2).

## Patentansprüche

1. Vorrichtung (1) zur Steuerung der Bremsung eines Anhängers, umfassend:
- mindestens eine Steuerleitung (2), die mit einer Quelle für ein Betriebsfluid mit einem ersten Druck verbindbar ist;
- mindestens eine zusätzliche Leitung (3);
- mindestens eine Bremsleitung (4), die mit dem Bremssystem des Anhängers verbunden werden kann;
mindestens einen Akkumulator (6), der fluidbetrieben mit der zusätzlichen Leitung (3) verbunden ist,
Ventilmittel (7), die zwischen dem Akkumulator (6) und der Bremsleitung (4) angeordnet und zwischen mindestens einer Versorgungsposition, in der der Akkumulator (6) mit der Bremsleitung (4) in Verbindung steht, und einer Isolationsposition, in der der Akkumulator (6) von der Bremsleitung (4) isoliert ist, bewegbar sind;
mindestens erste Pilotierungsmittel (11) der Ventilmittel (7), die mindestens eine erste Pilotierungsleitung (11a) umfassen, die fluidbetrieben mit der Steuerleitung (2) verbunden ist und ausgebildet ist, um die Ventilmittel (7) in Richtung der Versorgungsposition zu drängen;
mindestens zweite Pilotierungsmittel (12), die auf die Ventilmittel (7) entgegengesetzt zu den ersten Pilotierungsmitteln (11) wirken,
**dadurch gekennzeichnet,**
**dass** die zusätzliche Leitung (3) mit einer Quelle eines Betriebsfluids mit einem zweiten Druck verbindbar ist.

2. Vorrichtung (1) nach Anspruch 1, **dadurch gekennzeichnet, dass** die zweiten Pilotierungsmittel (12) mindestens elastische Mittel (12a) umfassen, die ausgebildet sind, um der Wirkung der ersten Pilotierungsmittel (11) entgegenzuwirken.

3. Vorrichtung (1) nach Anspruch 1 oder 2, **dadurch gekennzeichnet, dass** die zweiten Pilotierungsmittel (12) mindestens eine zweite Pilotierungsleitung (12b) vom fluidbetriebenen Typ umfassen.

4. Vorrichtung (1) nach einem oder mehreren der vorhergehenden Ansprüche, **dadurch gekennzeichnet, dass** die Steuerleitung (2) mit der Bremsleitung (4) mittels zusätzlicher Ventilmittel (10) in Verbindung steht.

5. Vorrichtung (1) nach Anspruch 4, **dadurch gekennzeichnet, dass** die zusätzlichen Ventilmittel (10) von der Art einer Verengung sind.

6. Vorrichtung (1) nach Anspruch 4 oder 5, **dadurch gekennzeichnet, dass** die zweite Pilotierungsleitung (12b) stromabwärts der zusätzlichen Ventilmittel (10) fluidbetrieben mit der Bremsleitung (4) verbunden ist.

7. Vorrichtung (1) nach Anspruch 3 und Anspruch 4 oder 5, **dadurch gekennzeichnet, dass** die zweite Pilotierungsleitung (12b) mit dem Bremssystem (5) des Anhängers verbindbar ist.

8. Vorrichtung (1) nach einem oder mehreren der vorhergehenden Ansprüche, **dadurch gekennzeichnet, dass** die Ventilmittel (7) in mindestens eine zusätzliche Position bewegbar sind, in der die Steuerleitung (2) mit der Bremsleitung (4) in Verbindung steht.

9. Vorrichtung (1) nach Anspruch 8, **dadurch gekennzeichnet, dass** in der zusätzlichen Position sowohl der Akkumulator (6) als auch die Steuerleitung (2) in Verbindung mit der Bremsleitung (4) stehen.

10. Vorrichtung (1) nach Anspruch 9, **dadurch gekennzeichnet, dass** die zusätzliche Position im Anschluss an die Versorgungsposition gegenüber der Isolationsposition angeordnet ist.

11. Vorrichtung (1) nach Anspruch 4 und Anspruch 9 oder 10, **dadurch gekennzeichnet, dass** die zusätzlichen Ventilmittel (10) von der Art eines Einwegventils sind, das ausgebildet ist, um zu verhindern, dass das Betriebsfluid von der Steuerleitung (2) zur Bremsleitung (4) fließt.

12. Vorrichtung (1) nach Anspruch 8, **dadurch gekennzeichnet, dass** der Akkumulator (6) in der zusätzlichen Position von der Bremsleitung (4) isoliert ist.

13. Vorrichtung (1) nach Anspruch 12, **dadurch gekennzeichnet, dass** in der zusätzlichen Position die Steuerleitung (2) mit der Bremsleitung (4) durch mindestens ein Einwegventil (13) in Verbindung steht, das ausgebildet ist, um zu verhindern, dass das Betriebsfluid von der Steuerleitung (2) zur Bremsleitung selbst fließt.

14. Vorrichtung (1) nach Anspruch 12 oder 13, **dadurch gekennzeichnet, dass** die zusätzliche Position gegenüber der Versorgungsposition relativ zu der Isolationsposition angeordnet ist.

15. Vorrichtung (1) nach Anspruch 4 und Anspruch 13 oder 14, **dadurch gekennzeichnet, dass** die zusätzlichen Ventilmittel (10) vom Typ eines Einwegventils sind, das ausgebildet ist, um zu verhindern, dass das Betriebsfluid von der Bremsleitung (4) zu der Steuerleitung (2) fließt.

## Revendications

1. - Dispositif (1) pour commander le freinage d'une remorque, comprenant :
- au moins une ligne de commande (2) apte à être reliée à une source d'un fluide de fonctionnement à une première pression ;
- au moins une ligne supplémentaire (3) ;
- au moins une ligne de freinage (4) apte à être reliée au système de freinage de la remorque ;
- au moins un accumulateur (6) qui est relié de manière fluidique à ladite ligne supplémentaire (3),
- un moyen de vanne (7) positionné entre ledit accumulateur (6) et ladite ligne de freinage (4) et mobile entre au moins une position d'alimentation, dans laquelle ledit accumulateur (6) est placé en communication avec ladite ligne de freinage (4), et une position d'isolation, dans laquelle ledit accumulateur (6) est isolé de ladite ligne de freinage (4) ;
- au moins un premier moyen de pilotage (11) dudit moyen de vanne (7) comprenant au moins une première ligne de pilotage (11a) qui est reliée de manière fluidique à ladite ligne de commande (2) et agencée pour pousser ledit moyen de vanne (7) vers ladite position d'alimentation,
- au moins un second moyen de pilotage (12) agissant sur ledit moyen de vanne (7) et opposé audit premier moyen de pilotage (11),
**caractérisé par le fait que** la ligne supplémentaire (3) est apte à être reliée à une source d'un fluide de fonctionnement à une seconde pression.

2. - Dispositif (1) selon la revendication 1, **caractérisé par le fait que** lesdits seconds moyens de pilotage (12) comprennent au moins des moyens élastiques (12a) agencés pour contrecarrer l'action desdits premiers moyens de pilotage (11).

3. - Dispositif (1) selon la revendication 1 ou 2, **caractérisé par le fait que** lesdits seconds moyens de pilotage (12) comprennent au moins une seconde ligne de pilotage (12b) du type fluidique.

4. - Dispositif (1) selon une ou plusieurs des revendications précédentes, **caractérisé par le fait que** ladite ligne de commande (2) communique avec ladite ligne de freinage (4) par l'intermédiaire de moyens de vanne supplémentaires (10).

5. - Dispositif (1) selon la revendication 4, **caractérisé par le fait que** lesdits moyens de vanne supplémentaires (10) sont du type à rétrécissement.

6. - Dispositif (1) selon la revendication 4 ou 5, **caractérisé par le fait que** ladite seconde ligne de pilotage (12b) est reliée de manière fluidique à ladite ligne de freinage (4) en aval desdits moyens de vanne supplémentaires (10).

7. - Dispositif (1) selon la revendication 3 et la revendication 4 ou 5, **caractérisé par le fait que** ladite seconde ligne de pilotage (12b) est apte à être reliée au système de freinage (5) de la remorque.

8. - Dispositif (1) selon une ou plusieurs des revendications précédentes, **caractérisé par le fait que** lesdits moyens de vanne (7) sont mobiles dans au moins une position supplémentaire, dans laquelle ladite ligne de commande (2) est mise en communication avec ladite ligne de freinage (4).

9. - Dispositif (1) selon la revendication 8, **caractérisé par le fait que**, dans ladite position supplémentaire, à la fois ledit accumulateur (6) et ladite ligne de commande (2) sont placés en communication avec ladite ligne de freinage (4).

10. - Dispositif (1) selon la revendication 9, **caractérisé par le fait que** ladite position supplémentaire est disposée à la suite de ladite position d'alimentation, à l'opposé de ladite position d'isolation.

11. - Dispositif (1) selon la revendication 4 et la revendication 9 ou 10, **caractérisé par le fait que** lesdits moyens de vanne supplémentaires (10) sont du type clapet de non-retour agencé pour empêcher le fluide de fonctionnement de s'écouler de la ligne de commande (2) à la ligne de freinage (4).

12. - Dispositif (1) selon la revendication 8, **caractérisé par le fait que**, dans ladite position supplémentaire, ledit accumulateur (6) est isolé de ladite ligne de freinage (4).

13. - Dispositif (1) selon la revendication 12, **caractérisé par le fait que**, dans ladite position supplémentaire, ladite ligne de commande (2) est placée en communication avec ladite ligne de freinage (4) au moyen d'au moins un clapet de non-retour (13) agencé pour empêcher le fluide de fonctionnement de s'écouler de la ligne de commande (2) à la ligne de freinage elle-même.

14. - Dispositif (1) selon la revendication 12 ou 13, **caractérisé par le fait que** ladite position supplémentaire est située à l'opposé de ladite position d'alimentation par rapport à ladite position d'isolation.

15. - Dispositif (1) selon la revendication 4 et la revendication 13 ou 14, **caractérisé par le fait que** lesdits moyens de vanne supplémentaires (10) sont du type clapet de non-retour agencé pour empêcher le fluide de fonctionnement de s'écouler de la ligne de freinage (4) à ladite ligne de commande (2).
